Europäisches Patentamt

**European Patent Office**

**Office européen des brevets**

(11) Numéro de publication: **0 088 255**
**B1**

(12) **FASCICULE DE BREVET EUROPÉEN**

(45) Date de publication du fascicule du brevet:
**05.11.86**

(51) Int. Cl.⁴: **B 65 D 81/32, B 65 B 9/04**

(21) Numéro de dépôt: **83101391.7**

(22) Date de dépôt: **14.02.83**

(54) **Emballage et procédé d'emballage.**

(30) Priorité: **03.03.82 FR 8203513**

(43) Date de publication de la demande:
**14.09.83 Bulletin 83/37**

(45) Mention de la délivrance du brevet:
**05.11.86 Bulletin 86/45**

(84) Etats contractants désignés:
**AT CH DE FR GB LI NL**

(56) Documents cité:
**FR-A-2 268 689**
**US-A-3 149 981**
**US-A-3 305 368**
**US-A-3 563 768**

(73) Titulaire: **SOCIETE DES PRODUITS NESTLE S.A.,
Case postale 353, CH- 1800 Vevey (CH)**

(72) Inventeur: **Risler, Pierre, 12, Allée des 4 sous,
F-95160 Montmorency (FR)**

LIBER, STOCKHOLM 1986

## Description

L'invention concerne un emballage et un procédé d'emballage pour produit alimentaire comportant deux composants maintenus dans deux compartiments séparés jusqu'à l'utilisation, les deux compartimes étant constitués par un alvéole imbriqué dans une cavité de volume plus grand que celui de l'alvéole, cavité et alvéole étant fermés par au moins un opercule.

Le brevet US 3 305 368 concerne un conteneur pour boisons à deux compartiments superposés. Cet emballage n'est prévu que pour compartimenter des liquides et l'un des compartiments est de volume réduit par rapport au second.

Le brevet français 20 25 269 et ceux des Etats-Unis 3 563 768 et 3 149 981 concernent le conditionnement en sachets à compartiments séparés de constituants d'un produit culinaire ou d'une boisson ou d'ingrédients d'assaisonnement. Dans de tels sachets, la séparation est habituellement réalisée à partir d'un sachet simple en soudant ses parois selon une ligne médiane ou par intercallage d'une membrane entre celles-ci. Ces emballages ont l'inconvénient d'être mal adaptés, p.ex. aux produits en morceaux pour lesquels le dosage et le remplissage sont difficiles et d'être incommodes au moment de l'utilisation, une partie des produits restant fréquemment collée aux parois, ou dans les coins des compartiments du sachet.

L'emballage selon l'invention pallie ces inconvénients. La revendication 1 indique dans sa première partie, les éléments de l'emballage selon l'invention, qui sont compris dans l'état de la technique selon le brevet US-A-3 305 368. Il est caractérisé par le fait que l'alvéole et la cavité ont sensiblement la même hauteur et que les deux composant sont de nature différente.

L'emballage présent est particulièrement bien adapté aux produits alimentaires comportant deux composants de nature différente, chaque composant devant être emballé d'une manière appropriée à sa nature.

On entend par là que ces composants ont des propriétés physiques, chimiques ou organoleptiques qui les rendent incompatibles en mélange lors d'un stockage prolongé, p.ex. une grande différence de granulométrie, densité, fluidité, humidité, hygroscopicité, pouvoir adsorbant, couleur, arôme ou prédisposition à la réaction de Maillard ou à une dégradation enzymatique. On peut citer par exemple, une boisson et du sucre, un dessert lacté et une garniture de fruits, un plat préparé comportant des morceaux de viande, de poisson, d'oeufs, de légumes et une sauce, un potage comportant une garniture en morceaux et une masse poudreuse, p. ex. tel que décrit dans la demande de brevet européenne 87 667.

Les dessins annexés, donnés à titre d'exemple, illustrent l'emballage et le procédé d'emballage d'un produit comportant une garniture de morceaux d'aliment et une masse poudreuse. Dans ces dessins:

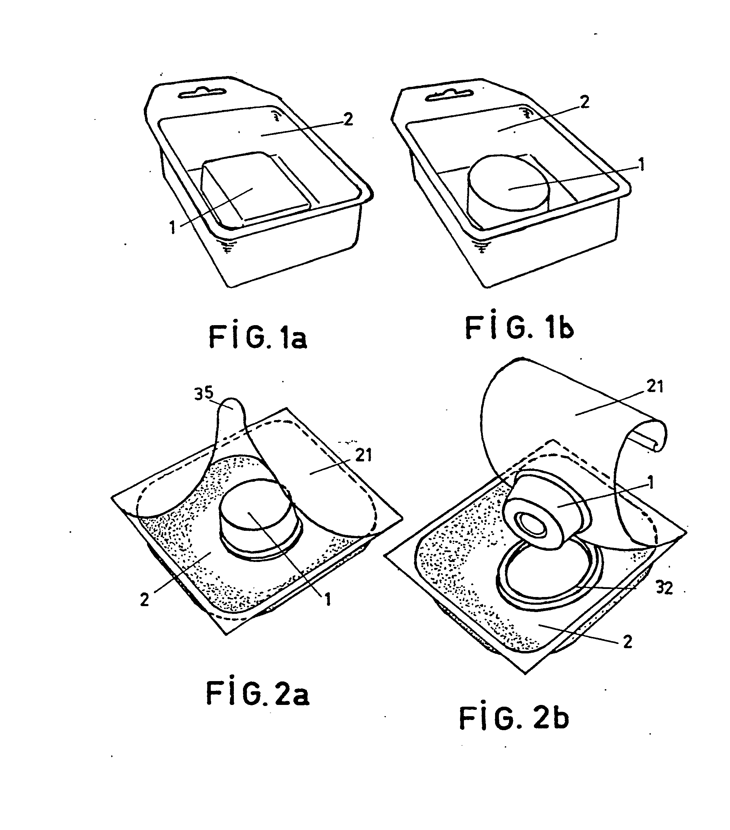

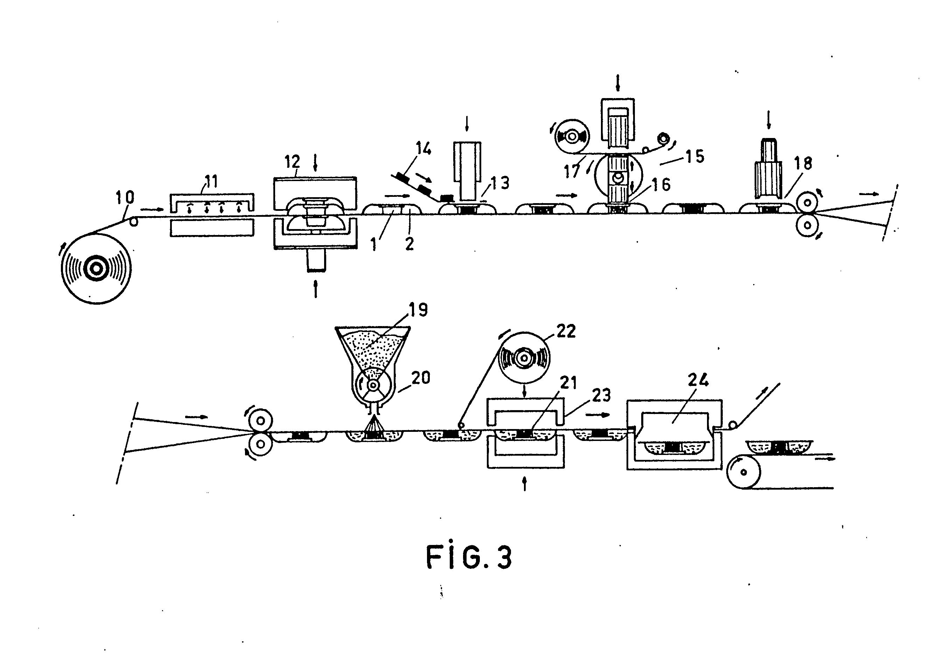

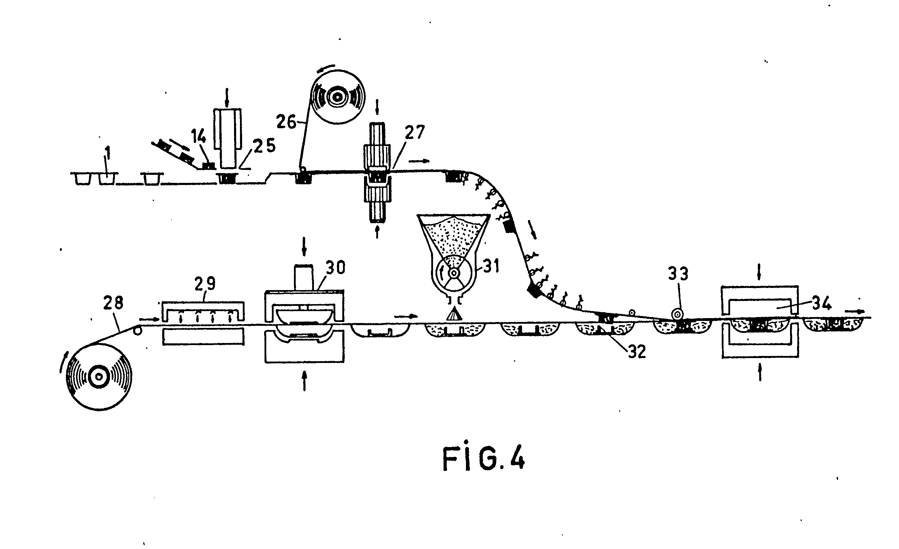

- Les figures 1a et 1b représentent des vues schématiques et en perspective de deux variantes de l'emballage ouvert.
- Les figures 2a et 2b sont des vues schématiques et en perspective de variantes de l'emballage avec l'opercucule en cours d'ouverture.
- Les figures 3 et 4 illustrent de façon schématique deux variantes du procédé d'emballage.
- Selon la figure 3, à partir d'une bande thermoplastique continue 10 préréchauffée en 11, on forme par emboutissage en 12 simultanément l'alvéole 1 et la cavité 2, l'alvéole présentant son ouverture vers le haut. Les alvéoles sont remplis en 13 avec la garniture 14, de préférence compactée. En 15 on met en place les opercules 16, découpés à partir d'une bande en rouleau 17, qu'on colle ensuite à la station 18. On peut prévoir que la bande 10 traverse ensuite un bac d'eau non représenté en vue de pasteuriser la garniture. On retourne la bande 10 portant les récipients dont les alvéoles sont remplis et fermés de sorte que les cavités 2 présentent leur ouverture vers le haut. On dose la masse poudreuse 19 en 20 et on remplit les cavités 2 qu'on ferme au moyen d'opercules 21 provenant de la bande en rouleau 22, par soudage au poste 23, puis on découpe l'ensemble en 24, tandis qu'on évacue les récipients fermés et les déchets provenant du découpage des bandes.
- Selon la figure 4, les alvéoles 1 sont constitués de pots préformés dans un matériau thermoplastique et cheminant avec leur ouverture vers le haut. On les remplit en 25 avec la garniture 14 de préférence compactée, puis on ferme les pots au moyen d'une bande en rouleau 26 à laquelle on les soude à la station 27. On peut ensuite pasteuriser la garniture comme ci-dessus. A partir d'une autre bande en rouleau 28 préréchauffée en 29, on forme en 30 les cavités 2 se présentant l'ouverture vers le haut puis on dose la masse poudreuse à la station 31. Les bandes continues 26 et 28 portant respectivement les alvéoles 1 et les cavités 2 cheminent en synchronisme et viennent se superposer de sorte que les alvéoles 1 viennent se loger exactement au centre des cavités 2. Pour faciliter le centrage, on prévoiera avantageusement une nervure annulaire 32 au fond des cavités 2, cette nervure servant également à maintenir la masse poudreuse à la périphérie. De préférence, un rouleau 33 aidera à l'insertion des alvéoles 1. On soude enfin les bandes 26 et 28 en 34, la suite des opérations, découpage et évacuation s'effectuant comme représenté à la figure 3.

Les alvéoles, cavités ét opercules sont réalisés en des matériaux étanches à l'humidité, à la lumière et à l'oxygène. A titre d'exemple, les cavités et alvéoles seront thermoformés à partir d'un matériau multicouche comprenant une feuille de chlorure de polyvinyl chargé de dioxyde de titane et une feuille de chlorure de polyvinylidène ou un complèxe à base de polypropylène chargé de dioxyde de titane et d'une couche médiane de carbon black. Les opercules seront avantageusement constitués d'une feuille d'aluminium contre-couchée de polyester, polypropylène ou polyamide.

Les opercules auront de préférence une languette d'arrachage 35 de manière à faciliter leur ouverture.

Les alvéoles seront avantageusement de forme tronconique ou en forme de tronc de pyramide à base rectangulaire, c'est-à-dire qu'elles auront une dépouille facilitant le dosage de la garniture et l'évacuation de celle-ci pour l'emploi.

On a montré aux dessins la garniture déjà mise en forme au moment du remplissage. En variante, on peut doser les morceaux dans les alvéoles et les compacter directement à l'intérieur de ceux-ci.

De plus, la garniture et la masse poudreuse peuvent être avantageusement emballées sous atmosphère inerte et à l'abri de la lumière.

## Revendications

1. Emballage pour produit alimentaire comportant deux composants maintenus dans deux compartiments séparés jusqu'à utilisation, les deux compartiments étant constitués par un alvéole (1) imbriqué dans une cavité (2) de volume plus grand que celui de l'alvéole, cavité et alvéole étant fermés par au moins un opercule (16), caractérisé par le fait que l'alvéole et la cavité ont sensiblement la même hauteur et en ce que les deux composants (14, 19) sont de nature différente.

2. Emballage selon la revendication 1, caractérisé par le fait qu'il comporte une cavité (2) dont le fond est embouti ou thermoformé de manière à former un alvéole (1) d'ouverture opposée à celle de la cavité et deux opercules (16, 21) munis d'une languette d'arrachage pour ouverture rapide fermant l'alvéole et la cavité.

3. Emballage selon la revendication 1, caractérisé par le fait qu'il comporte une cavité fermée par un opercule (26) muni d'une languette d'arrachage pour ouverture rapide, l'opercule (26) servant également à fermer un alvéole fixé sur celui-ci.

4. Emballage selon l'une des revendications 1 à 3 caractérisé par le fait que ses deux compartiments sont étanches à la lumière, à l'oxygène et à l'humidité.

5. Procédé d'obtention d'un emballage pour produit alimentaire à deux composants, selon l'une des revendications 1 à 4, dans lequel on introduit un premier composant (14) dans l'alvéole (1), on ferme cet alvéole avec un opercule (16, 26), on remplit la cavité (2) avec un second composant (19) et on ferme la cavité avec un opercule (21, 26).

6. Procédé selon la revendication 5, caractérisé par le fait que, l'alvéole (1) étant embouti ou thermoformé dans le fond de la cavité, alvéole (1) et cavité (2) ayant des ouvertures opposées, on remplit l'alvéole (1) dont l'ouverture se présente vers le haut avec le premier composant (14), on ferme l'alvéole (1) avec un opercule (16), on retourne le récipient, la cavité (2) présentant alors son ouverture vers le haut, on remplit la cavité (2) avec le second composant (19) et on la ferme avec un opercule (21), la séquence des opérations de remplissage et de fermeture des deux compartiments pouvant être inversée.

7. Procédé selon la revendication 5, caractérisé par le fait qu'on remplit l'alvéole (1) avec le premier composant (14) qu'on le ferme avec un opercule (26) dont la surface est telle qu'elle puisse recouvrir l'ouverture de la cavité (2), qu'on remplit la cavité (2) avec le second composant (19) et qu'on ferme la cavité (2) avec l'opercule portant l'alvéole.

8. Procédé selon l'une des revendications 5 à 7, caractérisé par le fait que le premier composant (14) est une garniture en morceaux et le second (19) une masse poudreuse.

9. Procédé selon la revendication 8, caractérisé par le fait qu'on compacte la garniture préalablement à sa mise en place dans l'alvéole (1).

## Claims

1. A package for a food product comprising two components which are to be kept in two separated compartments until they are used, the two compartments being constituted by an alveolus (1) imbricated in a cavity (2) of a volume greater than that of the alveolus, the cavity and the alveolus being sealed by at least one lid (16), characterised in that the alveolus and the cavity have substantially the same height and the two components (14, 19) are of different nature.

2. A package according to claim 1, characterised in that it comprises a cavity (2), the bottom of which is stamped or thermoformed in order to form an alveolus (1) having an opening opposite that of the cavity and two lids (16, 21) which seal the alveolus and the cavity and are provided with a pull-off tongue for rapid opening.

3. A package according to claim 1, characterised in that it comprises a cavity which is sealed by a lid (26) provided with a pull-off tongue for rapid opening, the lid also being used to seal an alveolus attached thereto.

4. A package according to any one of claims 1 to 3, characterised in that its two compartments are tight with respect to light, oxygen and moisture.

5. A method for obtaining a package for a food product with two components, according to any one of claims 1 to 4, wherein a first component (14) is introduced into the alveolus (1), this alveolus is sealed with a lid (16, 26), the cavity (2) is filled with a second component (19) and is also sealed with a lid (21, 26).

6. A method according to claim 5, characterised in that, the alveolus (1) being stamped or thermoformed in the bottom of the cavity, the alveolus (1) and the cavity (2) having opposite openings, either the alveolus (1) is filled with the first component (14), the opening thereof being at the top, it is sealed with a lid (16), the container is turned over so that the cavity (2) then has its opening at the top, it is filled with the second component (19) and is sealed with a lid (21), or the procedure is defined with the sequence of the filling and sealing operations of the two compartments reversed.

7. A method according to claim 5, characterised in that the alveolus (1) is filled with the first component (14), is sealed with a lid (26), the area of which is such that it is able to cover the opening of the cavity (2), the cavity (2) is filled with the second component (19) and is sealed with the lid carrying the alveolus.

8. A method according to any one of claims 5 to 7, characterised in that the first component (14) is a garnish in pieces and the second component (19) is a powder mass.

9. A method according to claim 8, characterised in that the garnish is compacted before it is positioned in the alveolus (1).

**Patentansprüche**

1. Verpackung für ein Nahrungsmittelprodukt, welches zwei bis zum Gebrauch in zwei getrennten Abteilungen gehaltene Bestandteile umfaßt, wobei die zwei Abteilungen aus einem Näpfchen (1) bestehen, welches mit einen Hohlraum (2) von größeren Volumen als jenem des Näpfchens verschachtelt ist, wobei den Hohlraum und das Näpfchen durch wenigstens einen Deckel (16) verschlossen sind, dadurch gekennzeichnet, daß das Näpfchen und der Hohlraum in wesentlichen gleich hoch sind, und daß die beiden Bestandteile (14, 19) von unterschiedlicher Natur sind.

2. Verpackung nach Anspruch 1, dadurch gekennzeichnet, daß sie einen Hohlraum (2) umfaßt, dessen Boden auf solche Art und Weise tiefgezogen oder warmverformt worden ist, daß er ein Näpfchen (1) mit entgegengesetzter Öffnung zu derjenigen des Hohlraumes bildet, und weiterhin gekennzeichnet durch zwei mit einer zum raschen Öffnen dienenden Öffnungslasche versehene Deckel (16, 21), welche das Näpfchen bzw. den Hohlraum verschließen.

3. Verpackung nach Anspruch 1, dadurch gekennzeichnet, daß sie einen Hohlraum umfaßt, welcher mit einen Deckel (26) verschlossen ist, welcher Deckel (26) mit einer zum raschen Öffnen dienenden Öffnungslasche ausgestattet ist, wobei der Deckel (26) gleichermaßen zum Verschließen eines auf demselben foxierten Näpfchen dient.

4. Verpackung nach einem der Ansprüche 1 bis 3, dadurch gekennzeichnet, daß ihre zwei Abteilungen für Licht, Sauerstoff und Feuchtigkeit undurchlässig sind.

5. Verfahren zur Herstellung einer Verpackung für ein zwei Bestandteile umfassende Nahrungsmittelprodukt, nach einem der Anspruüche 1 bis 4, in welchem man einen ersten Bestandteil (14) in das Näpfchen (1) einführt, dieses Näpfchen mit einem Deckel (16, 26) verschließt, den Hohlraum (2) mit einem zweiten Bestandteil (19) anfüllt und den Hohlraun mit eine; Deckel (21, 26) verschließt.

6. Verfahren nach Anspruch 5, dadurch gekennzeichnet, daß das Näpfchen (1) aus den Boden des Hohlraumes durch Tiefziehen oder durch Thermoformung gebildet ist, wobei das Näpfchen (1) und der Hohlraun (2) entgegengesetzte Öffnungen aufweisen, daß man das Näpfchen (1), dessen Öffnung nach oben weist, mit dem ersten Bestandteil (14) füllt, daß man das Näpfchen (1) mit einem Deckel (16) verschließt, daß man den Behälter umdreht, wobei nun der Hohlraum (2) mit seiner Öffnung nach oben gekehrt ist, daß man den Hohlraum (2) mit dem zweiten Bestandteil (19) füllt und den Hohlraum mit einen Deckel (21) verschließt, wobei die Reihenfolge der Arbeitsvorgänge des Einfüllens und des Verschließens der zwei Abteilungen umgekehrt werden kann.

7. Verfahren nach Anspruch 5, dadurch gekennzeichnet, daß man das Näpfchen (1) mit dem ersten Bestandteil (14) füllt, daß man das Näpfchen (1) mit einem Deckel (26) verschließt, dessen Oberfläche so beschaffen ist, daß sie auch die Öffnung des Hohlraumes (2) bedecken kann, daß nan den Hohlraum (2) mit dem zweiten Bestandteil (19) füllt, und daß man den Hohlraum (2) mit dem auf dem Näpfchen befindlichen Deckel verschließt.

8. Verfahren nach einem der Ansprüche 5 bis 7, dadurch gekennzeichnet, daß der erste Bestandteil (14) aus Stückchen bestehende Zutaten sind, und daß der zweite Bestandteil (19) eine pulverförmige Masse ist.

9. Verfahren nach Anspruch 8, dadurch gekennzeichnet, daß man die vorher in das Napfchen (1) eingebrachten Zutaten verdichtet.

FÍG. 1a

FÍG. 1b

FÍG. 2a

FÍG. 2b

FIG. 3

FIG.4

0 088 255